# FASCICULE DE BREVET EUROPEEN

(11) **EP 1 690 216 B1**
(45) Date de publication et mention de la délivrance du brevet: **11.11.2009**
(21) Numéro de dépôt: 04805640.2
(22) Date de dépôt: 03.12.2004
(51) Int. Cl.: G06K 19/07

(54) **DOCUMENT DE SECURITE A CARACTERISTIQUES IMPRIMEES INVARIABLES ET VARIABLES, ET PROCEDE DE FABRICATION**
INVARIABLE UND VARIABLE DRUCKZEICHEN TRAGENDES SICHERHEITSDOKUMENT UND HERSTELLUNGSVERFAHREN
SECURITY DOCUMENT CARRYING INVARIABLE AND VARIABLE PRINTED CHARACTERS AND PRODUCTION METHOD

(30) Priorité: 04.12.2003 FR 0314216
(43) Date de publication de la demande: 16.08.2006
(73) Titulaire: OBERTHUR TECHNOLOGIES, 92300 Levallois Perret (FR)
(72) Inventeur: DEMAIMAY, Florian, F-35000 Rennes (FR); BORDE, Xavier, F-35410 Osse (FR)
(74) Mandataire: Branger, Jean-Yves
(86) Numéro de dépôt international: PCT/FR2004/003121
(87) Numéro de publication internationale: WO 2005/057480

(56) Documents cités:
- EP-A- 0 786 357
- EP-A- 1 014 302
- DE-A- 10 054 873
- DE-A- 19 637 215
- US-A- 6 111 506
- US-A- 6 127 989

## Description

La présente invention se rapporte à un document de sécurité qui comprend des caractéristiques imprimées invariables et variables, ainsi qu'un procédé de fabrication d'un tel document.

Au sens de la présente invention, on entend par document de sécurité ou document d'identification, un document tel qu'une carte d'identité, un permis de conduire, un passeport, qui comporte des caractéristiques imprimées invariables, c'est-à-dire qui ne changent pas d'un document à l'autre, telles que les mentions "nom", "prénom", "sexe", "adresse", "nationalité", "taille", etc, ainsi que des caractéristiques imprimées variables, c'est-à-dire spécifiques à son porteur et en particulier à son propriétaire, et différentes d'un porteur à l'autre. Ces caractéristiques peuvent être constituées par la mention du patronyme, du prénom, de la taille, etc, dudit porteur.

Ces caractéristiques variables sont les plus sujettes à des fraudes ou des falsifications. Pour lutter contre ces tentatives, il est couramment admis d'utiliser des laminats de sécurités auto-adhésifs ou thermoscellables qui protègent ces mentions variables.

Cependant, les techniques de contrefaçon et de falsification sont toujours en évolution et il est nécessaire pour les imprimeurs de documents de sécurité de maintenir en permanence une avance technologique sur ces éléments de sécurité, pour limiter ces problèmes. De ce fait, il est rapidement apparu nécessaire d'introduire de nouvelles technologies pour la protection des documents d'identification.

L'incorporation d'une puce électronique sans contact (ou transpondeur) permet de répondre à ce besoin et d'augmenter le niveau de sécurité d'un document en y stockant, de façon sécurisée, les caractéristiques variables du porteur ainsi que ces éléments de biométrie (photo, empreinte digitale, iris de l'oeil, forme de la main, du visage, etc...).

La relecture de ces informations permet, par l'intermédiaire du dispositif approprié (comprenant notamment un ordinateur), de s'assurer de la parfaite corrélation entre les caractéristiques contenues sur le document et celles contenues dans la puce. Ce nouveau niveau de sécurité est aujourd'hui officiellement recommandé par l'ICAO (International Civil Aviation Organization).

Afin d'inclure dans un document de sécurité une puce sans contact, on a déjà proposé plusieurs solutions.

Le document EP-A-1 329 843 (HITACHI) propose "d'enfouir" une micro-puce de type particule ("particle-like") dans un passeport. La puce peut être située dans l'une des pages quelconque du document ou de la couverture. Ce document ne donne aucune indication sur la solution technique à mettre en oeuvre pour "enfouir" cette puce dans le corps du passeport.

On a aussi proposé d'utiliser une page en matière plastique (PVC, PET, Polycarbonate...) dans le corps de laquelle la puce ainsi que son antenne se trouvent prises en sandwich. Cette solution oblige à utiliser une page de matière plastique et non en papier. Ceci oblige par ailleurs à utiliser des procédés spécifiques pour l'impression de la page. Le façonnage de cette page dans un livret, par exemple un passeport, pose également des problèmes, dans la mesure où ces matériaux plastiques sont cassants et ne peuvent pas être cousus.

Des solutions particulières doivent alors être mises en oeuvre, comme décrites dans les documents WO-A-98/19870 (SETEC OY) ou EP-A-1 008 459 (ENSCHEDE).

D'autre part, le recours à cette solution a pour inconvénient de générer une épaisseur importante de documents qui rend l'incorporation dans un livret tel qu'un passeport peu esthétique, provoque l'ouverture intempestive du livret, et occasionne une rigidité accrue.

L'une des solutions les plus souvent mise en oeuvre et décrite consiste à utiliser un support extérieur appelé "inlay", comportant le dispositif "RFID" (Radio Frequency Identification) avec notamment sa puce sans contact et son antenne.

Ledit "inlay" peut se présenter sous la forme d'un support en polyester, d'un complexe (US-A-5,528,222), d'une étiquette (WO-A-00/42569), ou toute autre forme adaptée. Dans tous les cas, les solutions décrites comprennent le fait d'insérer dans le produit final (passeport ou document de sécurité) cet "inlay", sous la forme d'un élément préfabriqué et rapporté, soit par encollage, laminage, dépôt d'étiquette, ou toute autre technique adaptée.

On peut par exemple l'insérer entre la couverture du passeport et la page de garde. Cette solution est actuellement mise en oeuvre dans les passeports de l'Etat malais.

Elle présente l'inconvénient d'impliquer une étape supplémentaire d'inclusion de 1"'inlay" dans le process de façonnage du document. En outre, un autre inconvénient, du point de vue sécuritaire, est le risque de pouvoir séparer cet "inlay" du document pour le falsifier ou le remplacer.

La Société FASVER a récemment proposé une variante de la solution précédente dans laquelle l'antenne et la puce sont incorporées dans des laminats de sécurité. Ces derniers sont aujourd'hui déjà utilisés dans les produits d'identification pour éviter l'altération des mentions variables ou de la photo. Le principal défaut de cette solution est qu'elle laisse visible le composant et son antenne. Ceci peut nuire à la bonne visibilité du reste du document et rend l'altération de la puce et/ou de l'antenne très accessible.

La Société ARJO WIGGINS propose dans le document WO-A-02/089052 une couverture de passeport multicouche, dans l'épaisseur de laquelle est logée la puce. L'objet de ce document est de compenser l'épaisseur de la puce par des surépaisseurs ou des cavités dans des matériaux qui seront additionnés à la feuille de base, par enduction ou contre-collage, pour former la couverture du passeport.

On connaît par ailleurs par les documents WO-A-01/78908 et EP-A-1 035 504, une technique qui consiste à imprimer directement sur un support une antenne à l'aide d'une encre conductrice de l'électricité et à y connecter une puce sans contact.

Cette solution est intéressante car elle permet de se dispenser d'un élément extérieur rapporté au document de sécurité, l'antenne étant directement imprimée sur celui-ci.

Dans le document DE-A-100 54 873 est décrite une structure de carte à puce sans contact, dans laquelle la puce est ceinturée d'un muret également porté par la carte, destiné à l'isoler au moins partiellement des sollicitations mécaniques extérieures.

Cette technique dite "dam and fill", requiert la constitution du muret au moyen d'une enduction d'un matériau fluide et dense, apte à durcir, réalisée à l'aide d'une unité d'injection et d'une aiguille de dosage.

Le puits ainsi constitué est rempli avec un adhésif ou une résine, de manière à isoler complètement la puce des sollicitations extérieures.

Sur le plan des résultats, cette solution est satisfaisante. Toutefois, elle est fastidieuse à mettre en oeuvre, dans la mesure où elle requiert du matériel additionnel pour la réalisation du muret.

Par ailleurs, elle ne permet pas de contrôler efficacement la hauteur du muret ainsi confectionné.

Le document. EP-A-0 786 357 qui reflète le préambule des revendications indépendantes, se rapporte à une carte à puce sans contact et à son procédé de fabrication. Comme visible aux figures 8a et 8b, la puce est ceinturée d'une plaque de renfort. Celle-ci présente une ouverture centrale plus grande que celle de la puce.

Il est précisé que la plaque peut être en aluminium, en matériau conducteur tel qu'un métal ou un alliage hautement rigide, en verre ou autre élément isolant.

Le document US-A-6 11 506 se rapporte à un document de sécurité tel qu'une carte d'identité, à puce sans contact et antenne. La carte comporte un encadrement périphérique, en métal, censé améliorer la résistance mécanique du document.

La présente invention vise à résoudre ces difficultés en proposant un document de sécurité du type exposé ci-dessus, dans lequel ledit muret est réalisé d'une manière plus économique et rationnelle.

Elle vise également à fournir un procédé simple à mettre en oeuvre pour la fabrication d'un tel document.

Ainsi, la présente invention propose un document de sécurité, tel qu'une carte d'identité, un permis de conduire, ou un passeport, qui comprend des caractéristiques imprimées invariables, ainsi que des caractéristiques imprimées variables, liées notamment à l'identité de son propriétaire, et dont au moins une feuille est revêtue d'une antenne imprimée au moyen d'une encre conductrice, qui est associée à une puce sans contact, des plots que comporte cette dernière étant directement ou indirectement en contact avec des plages appropriées de l'antenne en vue d'assurer son alimentation électrique, la puce étant ceinturée d'un muret également porté par la feuille, destiné à l'isoler au moins partiellement des sollicitations mécaniques extérieures, caractérisé par le fait que ledit muret est constitué d'un empilement de couches successives imprimées d'encre.

Dans la mesure où le muret est constitué d'un empilement de couches successives d'encre, on peut se servir, pour la réalisation de celui-ci, du même matériel que celui qui a précédemment servi à l'impression de l'antenne.

Par ailleurs, s'agissant d'impression de couches d'encre, la hauteur totale du muret peut être contrôlée au mieux, ce qui n'est pas le cas lorsqu'on dépose en une seule fois, une épaisseur d'un produit liquide et épais; comme décrit dans le document DE-A-100 54 873 précité.

Selon d'autres caractéristiques de ce document :
- ladite feuille est en papier ou en carton ;
- ledit muret est constitué d'un empilement de couches successives d'encre non conductrice ;
- ledit muret est constitué d'un empilement de couches successives alternées d'encre conductrice, respectivement non conductrice ;
- à l'exception de la première couche imprimée, chaque couche présente une largeur inférieure à la couche située immédiatement en dessous ;
- lesdites couches sont imprimées les unes sur les autres de manière à constituer une succession de gradins orientés soit vers l'intérieur, soit vers l'extérieur du "puits" constitué par ledit empilement ;
- ledit muret présente une hauteur au moins égale à la moitié de la hauteur de ladite puce, de préférence égale ou supérieure à la hauteur de ladite puce;
- l'espace interne libre du "puits" constitué par ledit empilement et non occupé par la puce est comblé par une colle ou une résine, notamment du type durcissant à la chaleur, aux rayonnements infrarouges ou ultraviolets ;
- ledit muret est discontinu, c'est-à-dire qu'il présente au moins une interruption ;
- ladite feuille est recouverte, du côté comportant l'antenne et la puce, d'une feuille additionnelle de protection.

L'invention concerne également un procédé de fabrication d'un tel document.

Ce procédé est du type selon lequel on revêt au moins une feuille dudit document d'une antenne imprimée au moyen d'une encre conductrice, on dispose sur cette antenne une puce sans contact, de telle manière que des plots que comporte cette dernière soient directement ou indirectement en contact avec des plages appropriées de l'antenne en vue d'assurer son alimentation électrique, et qu'on ceinture ladite puce d'un muret également porté par la feuille, destiné à l'isoler au moins partiellement des sollicitations mécaniques extérieures et est **caractérisé en ce que** l'on réalise le muret en imprimant successivement, les unes sur les autres des couches d'encre.

Le composant électronique appelé communément puce ou circuit intégré pourra, ci-après, être dénommé sous le terme générique technique "transpondeur" pour une application dite "sans contact" ("contactless"en anglais). Ce transpondeur conserve dans une mémoire déportée (ROM, PROM, EEPROM...) les données faisant partie de l'application considéré et d'autre part, procède au contrôle de la communication et assure la liaison radiofréquence. Il n'y a aucun contact électrique physique entre le transpondeur et la base station (matériel contenant l'ensemble des commandes capables de lire, d'écrire et de gérer les informations du transpondeur à l'aide de radiofréquences) lors du fonctionnement de l'application.

Le transpondeur, pour fonctionner, doit tirer son énergie de l'onde électromagnétique radiofréquence qui supporte l'échange des informations. Afin de disposer de l'énergie électrique nécessaire à ce fonctionnement, le transpondeur doit être branché sur une antenne (un enroulement de matière conductrice du courant). Quand l'antenne est placée dans un champ magnétique, un phénomène d'induction magnétique génère dans les spires de l'antenne un courant et une tension qui servent à l'alimentation électrique du transpondeur.

L'encre utilisée dans le cadre de l'invention pour réaliser l'antenne est de préférence une composition polymérique additionnée d'atomes d'argent, d'or, de cuivre ou de tout autre métal conducteur du courant électrique, voire de leur combinaison. Ces matériaux sont compatibles chimiquement avec la base polymérique de l'encre et lui confère des propriétés de viscosité, de transfert et d'adhésion telles que l'imprimabilité de la formulation soit correcte par rapport au procédé d'impression utilisé et que la tenue de l'encre sèche soit suffisante pour l'application envisagée. Cette encre peut également consister en une composition polymérique contenant des molécules organiques conductrices du courant électrique. Cette encre peut être imprimée pour confectionner l'antenne par toute technique d'impression permettant d'obtenir les spécifications requises en terme d'épaisseur des couches et de finesse des détails, telles que par exemple la sérigraphie, la taille-douce, la flexographie ...

Le fait que l'antenne soit directement imprimée sur un support constitutif du document constitue le premier élément de sécurité renforcé, comparativement à un "inlay" rapporté au document, par exemple entre sa couverture et sa page de garde, qui pourrait être plus aisément récupéré.

Le transpondeur est déposé par exemple par la technique dite du "flip-chip" ou par toute autre technique qui permet de placer précisément le transpondeur sur les plages de l'antenne. Si le transpondeur est déposé en "flip-chip", ce dernier doit être muni de plots de contacts, dénommés "bumps" en terminologie anglaise, qui assurent le contact électrique entre le circuit du transpondeur et les plages de l'antenne imprimée.

Le dépôt du transpondeur sur son antenne ne permet cependant pas une fixation suffisamment résistante du composant aux sollicitations mécaniques extérieures.

En effet, le document selon l'invention est principalement caractérisé par le fait qu'un muret ceinturant la puce, et ci-après dénommé "puits", est imprimé également avec une encre et, si possible, dans le même temps que l'antenne. De préférence, ledit puits est imprimé de sorte à constituer une succession de gradins formant une dénivellation plus ou moins prononcée.

Le puits formé peut ainsi servir de réceptacle à une formulation protectrice à base de monomères capables de polymériser selon des stimuli de nature chimique ou physique, donnant un matériau aux propriétés de résilience telles qu'il protégera le transpondeur des chocs mécaniques. La formulation protectrice peut être par exemple une résine ou une colle durcissant à la chaleur, aux rayonnements infrarouges ou aux rayonnements ultraviolets.

La formulation protectrice déposée au fond du puits peut être non conductrice du courant électrique. Dans ce cas, la conduction dudit courant est assurée par les plots de contacts implantés sur le transpondeur, qui touchent les plages de l'antenne.

Selon un mode de réalisation différent, elle peut être prévue conductrice du courant électrique, de manière anisotrope, c'est-à-dire de telle façon que le courant ne circule que dans une seule direction, en l'occurrence celle dans laquelle une pression est exercée pour coller le transpondeur sur les plages de l'antenne.

Les différentes couches d'encre qui constituent le puits sont agencées préférentiellement en forme de gradins, de manière à favoriser la remontée de la formulation protectrice qui, avant polymérisation, se trouve à l'état de liquide visqueux. Lorsque le transpondeur est déposé selon un repérage précis sur les plages de l'antenne, la formulation protectrice remonte contre les bords du puits, ce qui est favorisé par la forme appropriée de ce dernier et vient ainsi noyer le transpondeur, en lui assurant de la sorte, après polymérisation, une protection latérale et frontale (du côté du dépôt).

Si le puits constitué des différentes couches d'encre dépasse la hauteur nominale du transpondeur, alors la puce est complètement immergée dans le puits.

Pour des raisons techniques et économiques (chaque gradin nécessite en effet l'impression d'une couche d'encre et un séchage consécutif), il est possible de réaliser un puits moins profond que la hauteur nominale du transpondeur.

La quantité adéquate de formulation protectrice correspondant au volume du puits diminué de tout ou partie du volume du transpondeur plongeant dans le puits est alors déposée au fond de ce dernier. Si une partie du transpondeur dépasse du puits ou si un renforcement supplémentaire du dispositif est souhaité, une quantité additionnelle de la même formulation protectrice ou d'une autre est déposée au sommet du transpondeur pour l'en recouvrir.

Après polymérisation, le transpondeur se trouve donc emprisonné dans une gangue de matériau protecteur qui le protège latéralement et frontalement (haut et bas). Le transpondeur est solidaire du matériau protecteur. Ce matériau protecteur est lui-même solidaire du support (papier, papier enduit...) ainsi que de l'encre des couches constituant les gradins du puits. Ainsi, la résistance de l'ensemble se trouve grandement améliorée et permet ainsi d'assurer le fonctionnement du système pour toute la durée de circulation du document.

Cette résistance accrue permet en outre de protéger le composant des agressions mécaniques et/ou chimiques, qu'elles soient dues aux altérations subies par le document au cours de sa "vie" ou à des tentatives de falsification. Toute tentative frauduleuse de récupération du transpondeur sera ainsi rendue très difficile du fait de la parfaite solidarité des différents éléments composant le produit résultant (support + antenne + transpondeur).

D'autres caractéristiques et avantages de l'invention apparaîtront à la lecture de la description détaillée qui va suivre de certains modes de réalisation préférentiels.

Cette description sera faite en référence aux dessins annexés dans lesquels :
- la figure 1 est une vue de dessus, simplifiée, d'un circuit électronique "RFID" (puce sans contact) et de son antenne imprimée associée ;
- les figures 2 et 3 sont des vues de dessus, également simplifiées, de puces ceinturées par un muret à contour circulaire, respectivement carré ;
- les figures 4, 5 et 6 sont des vues partielles, en coupe verticale, d'une puce et de différentes formes de murets auxquelles elle est associée ;
- la figure 7 est une vue de dessus, simplifiée, d'une puce et du muret qui l'entoure, ce dernier étant interrompu en deux endroits.

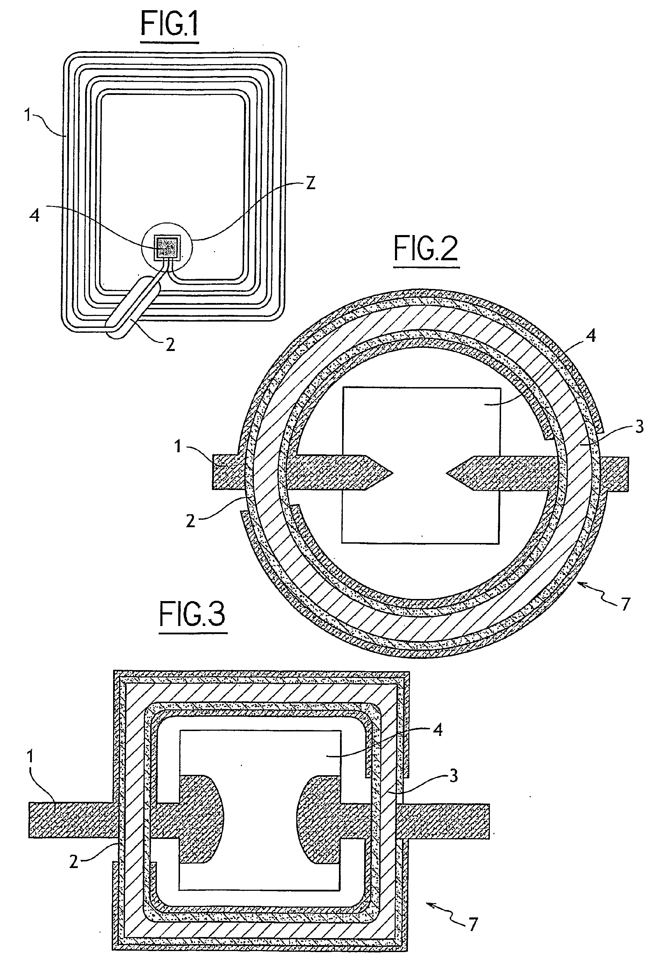

A la figure 1, la piste de l'antenne 1 est imprimée, par exemple en sérigraphie, à l'aide d'une encre conductrice.

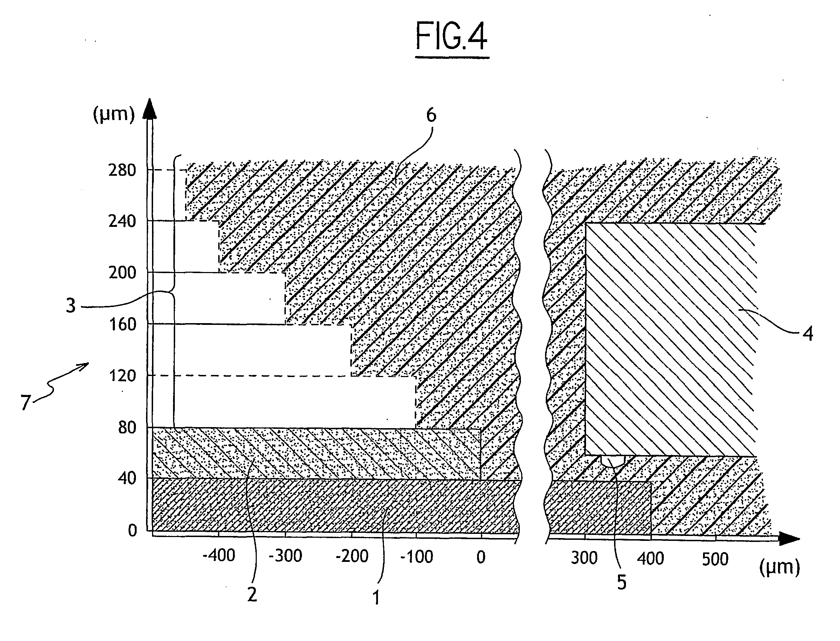

Le transpondeur 4 est monté sur l'antenne au niveau d'une zone d'implantation référencée Z. Cette dernière comporte les plages de contacts qui assurent la connexion avec les "bumps" (visibles sur les figures 4, 5 et 6) du transpondeur.

Un pont isolant réalisé avec une encre non-conductrice 2 permet de boucler l'antenne au niveau de la zone d'implantation, en autorisant le passage de la piste au-dessus des spires composant la bobine de l'antenne.

Dans l'exemple de la figure 2, la première couche d'encre conductrice qui constitue l'antenne 1 est déposée sur un support consistant par exemple en une feuille de papier ou de carton. Un muret 7 est réalisé ici selon une conception graphique circulaire autour de la zone d'implantation du transpondeur 4. Par ailleurs, une conception graphique particulière pour les plages permettra la connexion au "bumps" du transpondeur 4. Une seconde couche d'encre isolante 2, constitutive du muret 7, est imprimée sur la couche conductrice précédente. Une troisième couche d'encre 3 isolante ou conductrice est imprimée sur la couche 2. Il est alors possible de déposer des couches d'encre les unes sur les autres, afin de monter, par gradins successifs, l'intégralité du muret 7. Le muret ou puits est ainsi constitué qu'il ne perturbe pas le bon fonctionnement du système RFID (antenne + transpondeur) et permet la fixation efficace du composant électronique.

Dans l'exemple de la figure 3, la première couche d'encre conductrice qui constitue l'antenne 1 est déposée sur le support. Le muret 7 est réalisé ici selon une conception graphique rectangulaire autour de la zone d'implantation du transpondeur 4. Par ailleurs, une conception particulière pour les plages permettra la connexion au "bumps" du transpondeur 4. Une seconde couche d'encre isolante 2, constitutive du muret 7, est imprimée sur la couche conductrice précédente. Une troisième couche d'encre 3 isolante ou conductrice est imprimée sur la couche 2. Il est alors possible de déposer des couches d'encre à la suite afin de monter, par gradins successifs, l'intégralité du muret 7. Le muret ou puits est ainsi constitué qu'il ne perturbe pas le bon fonctionnement du système RFID (antenne + transpondeur) et permet la fixation efficace du composant électronique.

Bien entendu, toute autre forme du muret, par exemple polygonale, avec des plages particulières et permettant le bon écoulement de la formulation protectrice le long des parois formées peut être envisagée.

Sur les figures 4 et suivantes, on a répertorié en micromètres les emplacements et dimensions des différents éléments constituants de l'invention (en abscisses et ordonnées).

A la figure 4, les différentes couches d'encre déposées 1, 2 et 3, par exemple en sérigraphie, ont une épaisseur de 40 µm ; le transpondeur a, quant à lui, une épaisseur de 180 µm.

La première couche d'encre conductrice 1 qui constitue l'antenne est déposée sur le support constitué par exemple d'une feuille de papier. Une seconde couche d'encre non-conductrice 2 est ensuite imprimée sur la première avec un retrait de 300 µm par rapport au bord du transpondeur 4. Une troisième couche d'encre isolante ou conductrice est imprimée sur la couche 2 avec un retrait de 100 µm par rapport à cette dernière.

Il est alors possible d'imprimer des dépôts d'encre à la suite afin de monter par gradins successifs 3 le muret destiné à accueillir le transpondeur.

Il est possible d'alterner les encres conductrices et non conductrices pour les gradins 3 ou de privilégier une encre strictement isolante à partir du moment où la performance de l'antenne est conservée et que le procédé d'impression le permet.

Un volume adéquat de formulation protectrice 6 est coulé dans le puits, délimité par le muret 7, et le transpondeur 4 est ensuite déposé. Une quantité additionnelle de formulation protectrice 6 peut être coulée par-dessus ce montage.

La forme du puits ainsi constitué permet à la formulation protectrice, liquide et visqueuse avant polymérisation, de se répandre de manière homogène autour du composant électronique. Après polymérisation, le transpondeur 4 est protégé au niveau de ses faces inférieure et supérieure et, bien sûr, latéralement.

Dans cet exemple, la formulation protectrice 6 est une colle anisotrope qui assure le contact électrique (contact vertical) entre le "bump" 5 du transpondeur 4 et la plage de la couche conductrice 1 constituant l'antenne.

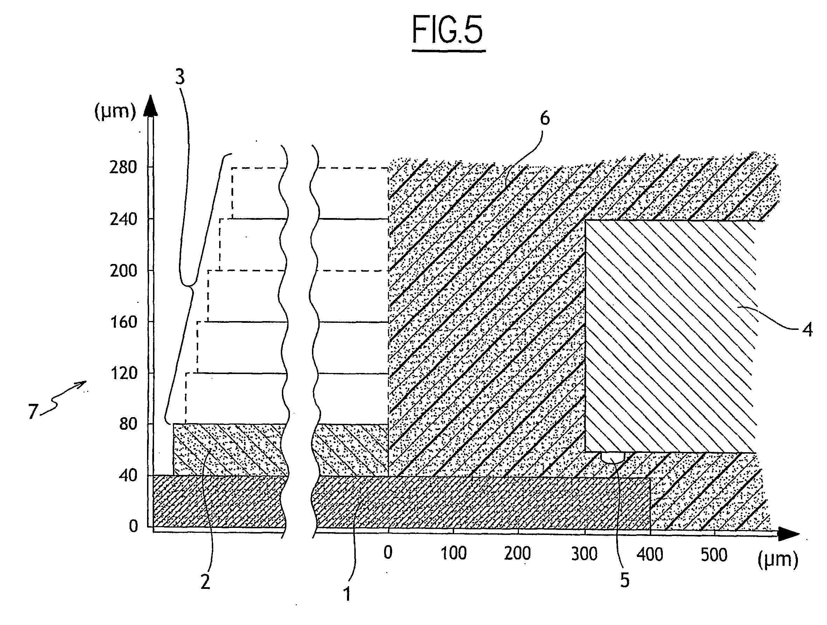

Dans la forme de réalisation de la figure 5, les différentes couches d'encre déposées 1, 2 et 3 ont comme précédemment une épaisseur de 40 µm ; le transpondeur a la même épaisseur de 180 µm.

La première couche d'encre conductrice 1 qui constitue l'antenne est déposée sur le support constitué par exemple d'une feuille de papier. Une seconde couche d'encre non-conductrice 2 est ensuite imprimée sur la première avec un retrait de 300 µm par rapport au bord du transpondeur 4. Une troisième couche d'encre isolante ou conductrice est imprimée sur la couche 2 sans retrait par rapport à cette dernière.

Il est alors possible d'imprimer des dépôts d'encre à la suite 3 afin de monter par gradins successifs 3 le muret destiné à accueillir le transpondeur.

Il est possible d'alterner les encres conductrices et non conductrices pour les gradins 3 ou de privilégier une encre strictement isolante à partir du moment où la performance de l'antenne est conservée et que le procédé d'impression le permet.

Un volume adéquat de formulation protectrice 6 est coulé dans le puits, délimité par le muret 7, et le transpondeur 4 est ensuite déposé. Une quantité additionnelle de formulation protectrice 6 peut être coulée par-dessus ce montage.

La forme du puits ainsi constitué permet à la formulation protectrice, liquide et visqueuse avant polymérisation, de se répandre de manière homogène autour du composant électronique. Après polymérisation, le transpondeur 4 est protégé au niveau de ses faces inférieure et supérieure et, bien sûr, latéralement.

Dans cet exemple, la formulation protectrice 6 est une colle anisotrope qui assure le contact électrique (contact vertical) entre le "bump" 5 du transpondeur 4 et la plage de la couche conductrice 1 constituant l'antenne.

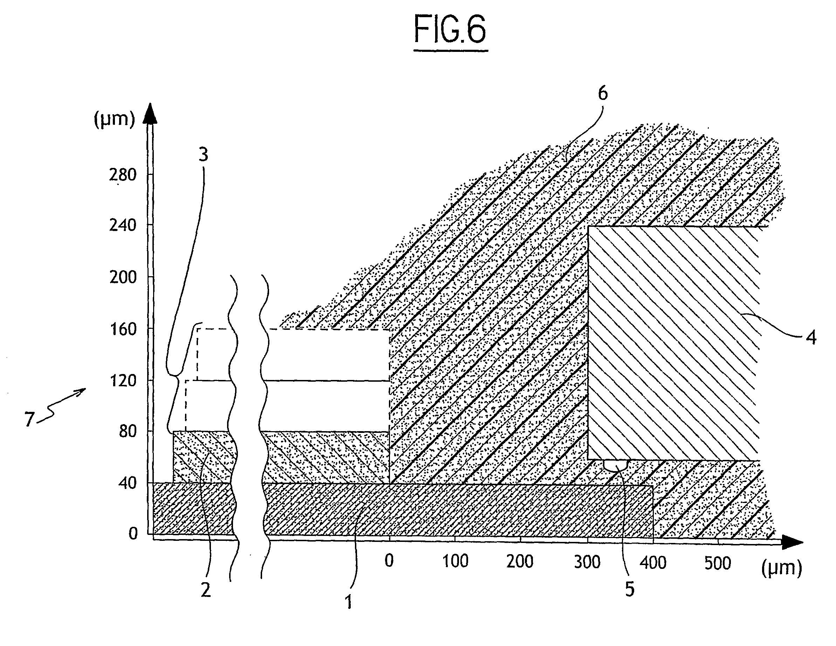

A la figure 6, les épaisseurs de couche d'encre et du transpondeur sont identiques à celles indiquées aux exemples précédents.

La première couche d'encre conductrice 1 qui constitue l'antenne est déposée sur le support. Une seconde couche d'encre non-conductrice 2 est ensuite imprimée sur la première avec un retrait de 300 µm par rapport au bord du transpondeur 4. Une troisième, puis une quatrième couche d'encre isolante ou conductrice sont déposées sur la couche 2 sans retrait par rapport à cette dernière pour atteindre une hauteur de paroi de 160 µm. La hauteur de la dénivellation du puits est donc inférieure à la hauteur nominale du transpondeur mais est au moins supérieure à la moitié de cette dernière.

Un premier volume adéquat de formulation protectrice 6 est coulé dans le puits et le transpondeur 4 est ensuite déposé, une seconde quantité de formulation protectrice 6 doit être coulée sur ce montage afin de former la calotte protectrice supérieure. La forme du puits permet de contenir la première quantité de formulation protectrice coulée. La seconde quantité de formulation protectrice se répand pour couvrir la partie émergente du transpondeur 4.

Après polymérisation, ce dernier est protégé en face inférieure et en face supérieure et, bien sûr, latéralement.

Dans cet exemple, comme précédemment, la formulation protectrice 6 est une colle anisotrope qui assure le contact électrique (contact vertical) entre le "bump" 5 du transpondeur 4 et la plage de la couche conductrice 1 constituant l'antenne.

Bien entendu, dans les exemples présentés précédemment, une feuille additionnelle est contrecollée contre celle qui reçoit la puce et l'antenne, afin de rendre ces dernières non visibles.

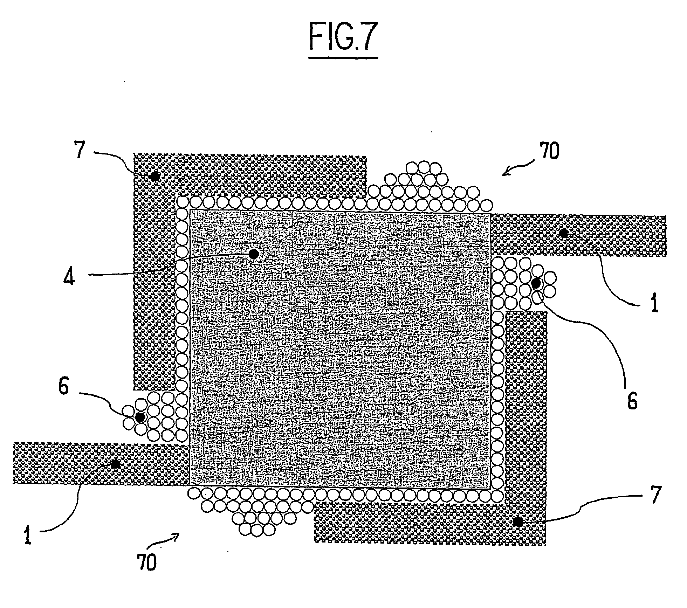

Dans la variante représentée à la figure 7, on se propose de réaliser avec une encre conductrice, sur le support, un puits 7 qui est interrompu en deux endroits, ménageant ainsi des ouvertures 70. Celles-ci se situent dans la zone des extrémités terminales de l'antenne 1. En quelque sorte, les rebords du puits qui délimitent chacune des ouvertures 70 encadrent ces extrémités terminales.

Ledit puits, de forme initiale rectangulaire, est donc ainsi constitué de deux équerres en « L » encadrant en partie le circuit intégré ou puce 4.

Ladite puce est collée sur le support via une résine 6 (ou « underfill ») qui polymérise thenniquement. Cette résine, avant polymérisation, est une résine fluide dont le fluage va être déclenché sous la puce en appuyant sur cette dernière, puis canalisé le long desdites équerres sérigraphiées en « L ». Le surplus sera alors évacué grâce aux ouvertures 70.

Grâce à cette géométrie particulière, la résine peut donc se répondre de manière régulière sous la puce juste avant la polymérisation et de fait assurer un socle homogène au circuit intégré, afin de solidariser solidement et définitivement au support.

Ainsi, conformément à l'invention :
- l'antenne et la puce associées font partie intégrante du document, sans nécessité d'avoir recours à un élément extérieur rapporté ;
- l'antenne et la puce ne sont pas visibles ;
- toute tentative de falsification et/ou d'altération de la puce ou de l'antenne entraîne un dommage irréversible du document, facilement identifiable ;
- pour une falsification complète d'un document tel qu'un passeport, le contrefacteur devra non seulement modifier la page portant des mentions variables, mais également celle, par exemple la couverture, qui inclut la puce. La difficulté s'en trouve d'autant plus grande. Ceci répond aux exigences de l'ICAO dans ce domaine ;
- la réalisation d'un muret autour de la puce améliore sa fixation. Le résultat est un ensemble plus résistant aux agressions extérieures.

## Revendications

1. Document de sécurité, tel qu'une carte d'identité, un permis de conduire, ou un passeport, qui comprend des caractéristiques imprimées invariables, ainsi que des caractéristiques imprimées variables, liées notamment à l'identité de son porteur, et dont au moins une feuille est revêtue d'une antenne imprimée (1) au moyen d'une encre conductrice, qui est associée à une puce sans contact (4), des plots (5) que comporte cette dernière étant directement ou indirectement en contact avec des plages appropriées de l'antenne (1) en vue d'assurer son alimentation électrique, la puce (4) étant ceinturée d'un muret (7) également poilé par la feuille, destiné à l'isoler au moins partiellement des sollicitations mécaniques extérieures, **caractérisé par le fait que** ledit muret (7) est constitué d'un empilement de couches successives imprimées d'encre (2, 3).

2. Document de sécurité selon la revendication 1, **caractérisé par le fait que** ladite feuille est en papier ou en carton.

3. Document de sécurité selon la revendication 1 ou 2, **caractérisé par le fait que** ledit muret (7) est constitué d'un empilement de couches successives (2, 3) d'encre non conductrice.

4. Document de sécurité selon la revendication 1 ou 2, **caractérisé par le fait que** ledit muret (7) est constitué d'un empilement de couches successives (2,3) alternées d'encre conductrice, respectivement non conductrice.

5. Document de sécurité selon l'une des revendications 1 à 4, **caractérisé par le fait qu'**à l'exception de la première couche imprimée, chaque couche (3) présente une largeur inférieure à la couche (2) située immédiatement en dessous.

6. Document de sécurité selon la revendication 5, **caractérisé par le fait que** lesdites couches (2, 3) sont imprimées les unes sur les autres, de manière à constituer une succession de gradins orientés soit vers l'intérieur, soit vers l'extérieur du "puits" (7) constitué par ledit empilement.

7. Document de sécurité selon l'une des revendications précédentes, **caractérisé par le fait que** ledit muret (7) présente une hauteur au moins égale à la moitié de la hauteur de ladite puce (4), de préférence égale ou supérieure à la hauteur de ladite puce (4).

8. Document de sécurité selon l'une des revendications précédentes, **caractérisé par le fait que** l'espace interne libre du "puits" constitué par ledit empilement et non occupé par la puce est comblé par une colle ou une résine (6), notamment du type durcissant à la chaleur, aux rayonnements infrarouges ou ultraviolets.

9. Document de sécurité selon l'une des revendications précédentes, **caractérisé par le fait que** ledit muret est discontinu, c'est-à-dire qu'il présente au moins une interruption.

10. Document de sécurité selon l'une des revendications précédentes, **caractérisé par le fait que** ladite feuille est recouverte, du côté comportant l'antenne et la puce, d'une feuille additionnelle de protection.

11. Procédé de fabrication d'un document de sécurité, tel qu'une carte d'identité, un permis de conduire, ou un passeport, qui comprend des caractéristiques imprimées invariables, ainsi que des caractéristiques imprimées variables, liées notamment à l'identité de son propriétaire, selon lequel on revêt au moins une feuille dudit document d'une antenne imprimée (1) au moyen d'une encre conductrice, on dispose sur cette antenne une puce sans contact (4), de telle manière que des plots (5) que comporte cette dernière soient directement ou indirectement en contact avec des plages appropriées de l'antenne (1) en vue d'assurer son alimentation électrique, et qu'on ceinture ladite puce (4) d'un muret (7) également porté par la feuille, destiné à l'isoler au moins partiellement des sollicitations mécaniques extérieures, **caractérisé par le fait qu'**on réalise ledit muret (7) en imprimant successivement, les unes sur les autres des couches d'encre (2, 3).

## Claims

1. Security document, such as an identity card, a driving licence, or a passport, which comprises invariable printed characteristics as well as variable printed characteristics, linked in particular to the identity of its holder, and of which at least one sheet is coated with a printed antenna (1) by means of a conductive ink, which is associated with a contactless chip (4), pads (5) of the latter being directly or indirectly in contact with appropriate lands of the antenna (1) in order to provide its electrical power supply, the chip (4) being surrounded by a low wall (7) also borne by the sheet, intended to at least partially insulate it from the external mechanical stresses, **characterized in that** said low wall (7) comprises a stack of successive printed layers (2, 3) of ink.

2. Security document according to Claim 1, **characterized in that** said sheet is made of paper or cardboard.

3. Security document according to Claim 1 or 2, **characterized in that** said low wall (7) comprises a stack of successive layers (2, 3) of non-conductive ink.

4. Security document according to Claim 1 or 2, **characterized in that** said low wall (7) comprises a stack of successive alternate layers (2, 3) of conductive, respectively non-conductive, ink.

5. Security document according to one of Claims 1 to 4, **characterized in that**, apart from the first printed layer, each layer (3) has a width less than the layer (2) situated immediately below.

6. Security document according to Claim 5, **characterized in that** said layers (2, 3) are printed one on top of the other, so as to form a succession of terraces oriented either inward, or outward from the "well" (7) formed by said stack.

7. Security document according to one of the preceding claims, **characterized in that** said low wall (7) has a height at least equal to half the height of said chip (4), preferably equal to or greater than the height of said chip (4).

8. Security document according to one of the preceding claims, **characterized in that** the free internal space of the "well" formed by said stack and not occupied by the chip is backfilled by a glue or a resin (6), notably of the type that hardens with heat, with infrared or ultraviolet radiation.

9. Security document according to one of the preceding claims, **characterized in that** said low wall is discontinuous, that is to say, it has at least one interruption.

10. Security document according to one of the preceding claims, **characterized in that** said sheet is covered, on the side comprising the antenna and the chip, by an additional protective sheet.

11. Method of manufacturing a security document, such as an identity card, a driving licence or a passport, which comprises invariable printed characteristics, as well as variable printed characteristics, linked in particular to the identity of its owner, according to which at least one sheet of said document is coated with a printed antenna (1) by means of a conductive ink, a contactless chip (4) is positioned on this antenna so that the pads (5) of the latter are directly or indirectly in contact with appropriate lands of the antenna (1) in order to provide its electrical power supply, and said chip (4) is surrounded with a low wall (7) also borne by the sheet, intended to at least partially insulate it from the external mechanical stresses, **characterized in that** said low wall (7) is produced by successively printing, one on top of the other, layers (2, 3) of ink.

## Patentansprüche

1. Sicherheitsdokument, wie beispielsweise ein Personalausweis, ein Führerschein, oder ein Pass, das unveränderliche Druckzeichen umfasst, sowie veränderliche Druckzeichen, die insbesondere mit der Identität seines Trägers verbunden sind, und bei dem mindestens ein Bogen mit einer mittels einer leitfähigen Tinte gedruckten Antenne (1) versehen ist, die zu einem berührungslosen Chip (4) gehört, sowie Kontakte (5), die dieser letztgenannte umfasst, die direkt oder indirekt in Kontakt mit geeigneten Bereichen der Antenne (1) sind im Hinblick darauf, seine elektrische Versorgung sicherzustellen, wobei der Chip (4) von einer kleinen Mauer (7) umgeben ist, die ebenfalls vom Bogen getragen wird, die dazu bestimmt ist, ihn wenigstens teilweise von äußeren mechanischen Beanspruchungen zu isolieren, **dadurch gekennzeichnet, dass** die kleine Mauer (7) aus einem Stapel aufeinanderfolgender, gedruckter Tintenschichten (2, 3) gebildet ist.

2. Sicherheitsdokument gemäß Anspruch 1, **dadurch gekennzeichnet, dass** der Bogen aus Papier oder aus Karton ist.

3. Sicherheitsdokument gemäß Anspruch 1 oder 2, **dadurch gekennzeichnet, dass** die kleine Mauer (7) aus einem Stapel aufeinanderfolgender Schichten nicht-leitfähiger Tinte (2, 3) gebildet ist.

4. Sicherheitsdokument gemäß Anspruche 1 oder 2, **dadurch gekennzeichnet, dass** die kleine Mauer (7) aus einem Stapel aufeinanderfolgender, abwechselnd aus leitfähiger beziehungsweise nicht-leitfähiger Tinte gebildeter Schichten (2, 3) ist.

5. Sicherheitsdokument gemäß einem der Ansprüche 1 bis 4, **dadurch gekennzeichnet, dass** mit Ausnahme der ersten gedruckten Schicht jede Schicht (3) eine Breite aufweist, die kleiner als die unmittelbar darunterliegende Schicht (2) ist.

6. Sicherheitsdokument gemäß Anspruch 5, **dadurch gekennzeichnet, dass** die Schichten (2, 3) derart aufeinander gedruckt sind, dass sie eine Folge von Stufen bilden, die entweder zum Inneren oder zum Äußeren des "Schachts" (7) gerichtet sind, der von dem Stapel gebildet wird.

7. Sicherheitsdokument gemäß einem der vorhergehenden Ansprüche, **dadurch gekennzeichnet, dass** die kleine Mauer (7) eine Höhe mindestens gleich der halben Höhe des Chips (4), vorzugsweise gleich oder größer als die Höhe des Chips (4), aufweist.

8. Sicherheitsdokument gemäß einem der vorhergehenden Ansprüche, **dadurch gekennzeichnet, dass** der freie Innenraum des "Schachts", der von dem Stapel gebildet wird und nicht von dem Chip belegt ist, mit einem Kleber oder einem Harz gefüllt ist, insbesondere vom durch Wärme, durch Infrarotstrahlung oder Utraviolettstrahlung härtenden Typ.

9. Sicherheitsdokument gemäß einem der vorhergehenden Ansprüche, **dadurch gekennzeichnet, dass** die kleine Mauer unterbrochen ist, das heißt, dass sie wenigstens eine Unterbrechung aufweist.

10. Sicherheitsdokument gemäß einem der vorhergehenden Ansprüche, **dadurch gekennzeichnet, dass** der Bogen auf der Seite, die die Antenne und den Chip umfasst, mit einem zusätzlichen Schutzbogen bedeckt ist.

11. Verfahren zur Herstellung eines Sicherheitsdokuments, wie beispielsweise eines Personalausweises, eines Führerscheins, oder eines Passes, das unveränderliche Druckzeichen umfasst, sowie veränderliche Druckzeichen, die insbesondere mit der Identität seines Eigentümers verbunden sind, gemäß dem mindestens ein Bogen des Dokuments mit einer mittels einer leitfähigen Tinte gedruckten Antenne (1) versehen wird, auf dieser Antenne derart ein kontaktloser Chip (4) angeordnet wird, dass Kontakte (5), die dieser letztgenannte umfasst, direkt oder indirekt in Kontakt mit geeigneten Bereichen der Antenne (1) sind im Hinblick darauf, seine elektrische Versorgung sicherzustellen, und dass der Chip (4) von einer kleinen Mauer (7) umgeben wird, die ebenfalls von dem Bogen getragen wird, die dazu bestimmt ist, ihn wenigstens teilweise von äußeren mechanischen Beanspruchungen zu isolieren, **dadurch gekennzeichnet, dass** die kleine Mauer (7) realisiert wird, indem nacheinander Tintenschichten (2, 3) aufeinander gedruckt werden.
